# EUROPEAN PATENT APPLICATION

(11) **EP 4 162 793 A1**
(43) Date of publication of application: **12.04.2023**
(21) Application number: 22197163.3
(22) Date of filing: 22.09.2022
(51) Int. Cl.: A01J 25/12, A01J 25/15, A01J 27/04

(54) **A METHOD AND AN APPARATUS FOR THERMALLY TREATING AND FORMING A FOOD PRODUCT INTO A SHEET**

(30) Priority: 06.10.2021 EP 21201163
(71) Applicant: Tetra Laval Holdings & Finance S.A., 1009 Pully (CH); Arla Foods amba, 8260 Viby J (DK)
(72) Inventor: Andersen, Kim, 6000 Kolding (DK); Bagger, Rasmus, 9600 Aars (DK); Parmar, Bhavin, 8260 Viby (DK); Lillevang, Søren K., 8260 Viby (DK)
(74) Representative: Tetra Pak - Patent Attorneys SE

(57) **Abstract**

The present invention relates to an apparatus (100) and a corresponding method (200) for thermally treating and forming a food product (FP) into a sheet (S). The apparatus (100) comprises a first extrusion belt (110) and a second extrusion belt (110'). The first extrusion belt (110) and the second extrusion belt (110') are arranged opposite to each other at a distance such that a longitudinal gap (120) is formed in between. The apparatus (100) further comprises a food product inlet (130), a first thermal element (140) arranged at a back side (114) of the first extrusion belt (110) and a second thermal element (140') arranged at a back side (114') of the second extrusion belt (110'). The food product (FP) may be thermally treated and formed into the sheet (S) by being conveyed from the upper end (115) of the longitudinal gap (120) to the lower end (116) thereof.

## Description

### Technical Field

The invention relates to a method and an apparatus for thermally treating and forming a food product into a sheet.

### Background Art

Nowadays many food products are heated or cooled in order to increase the shelf life and to be prepared for consumers' use. In addition, in the food industry products are often produced in large quantities and need to be formed into certain shapes and sizes. Food products that are large in size may prolong the process of heating or cooling the food product and/or may complicate subsequent processing. For this reason many food products are often shaped into smaller pieces or into certain shapes. An example of such food products is an industrially produced Mozzarella block which may weigh from 2 kg to 10 kg, The block is typically cooked at about 60° and is thereafter cooled to a temperature below 35°. After the cooling the Mozzarella may be shredded into smaller pieces.

The food products are conventionally transported to shaping and cooling units and are cooled in a direct manner e.g. by bringing them into direct contact with brine or water. However, such shaping and cooling units are often hard run for a longer period of time due to the risk of contamination. As a consequence, heating, cooling and shaping of food products is often energy and time consuming and does not allow for much production flexibility. This is particularly true for food products in form of cheese, such as Mozzarella cheese and other types of cheese made by the pasta filata method.

### Summary

It is an object to at least partly overcome one or more of the above-identified limitations of the prior art. In particular, it is an object to provide an apparatus and a method for efficiently heat treating and forming food products, especially when the food products are different types of cheese and cheese-like products. Another object is to provide an apparatus and a method that facilitates subsequent shaping of the food product into different forms.

According to an aspect of the present invention there is provided an apparatus for thermally treating and forming a food product into a sheet, the apparatus comprising a first extrusion belt and a second extrusion belt extending longitudinally from an upper portion of the apparatus to a lower portion of the apparatus, wherein the first extrusion belt and the second extrusion belt are arranged opposite to each other at a distance such that a longitudinal gap is formed in between a front side of the first extrusion belt and a front side of the second extrusion belt, a food product inlet formed by an upper portion of the first extrusion belt and an upper portion of the second extrusion belt, the food product inlet being configured to feed the food product into the longitudinal gap at an upper end thereof, and wherein the first extrusion belt and the second extrusion belt are arranged to convey the food product from the upper end of the longitudinal gap to a lower end of the longitudinal gap, wherein a first thermal element is arranged at a back side of the first extrusion belt along at least a portion of the longitudinal gap and a second thermal element is arranged at a back side of the second extrusion belt along at least a portion of the longitudinal gap, such that the food product may be thermally treated and formed into the sheet by being conveyed from the upper end of the longitudinal gap to the lower end of the longitudinal gap.

The first extrusion belt and the second extrusion belt, arranged opposite to each other at the distance, may preferably be arranged parallel to each other. The distance in between the front surface of the first extrusion belt and the front surface of the second extrusion belt, arranged preferably parallel to each other, may be adjusted as desired. This in turn allows for adjusting a thickness of the sheet in a simple, flexible and controlled manner. By the thickness of the sheet is hereby meant a dimension of the sheet in the normal direction of the sheet. The first extrusion belt and the second extrusion belt may e.g. be driven by a motor such as a servo motor to convey the food product from the upper end of the longitudinal gap to a lower end of the longitudinal gap. Thereby, a speed of the food product being conveyed by the first extrusion belt and the second extrusion belt may be controlled.

By the first thermal element and the second thermal element being respectively arranged at the back side of the first and the second extrusion belt, the food product becomes thermally treated from both sides at the same time. Thereby, the apparatus allows for a simple and fast manner of thermally treating the food product. In addition, by the first thermal element and the second thermal element being respectively arranged at the back side of the first and the second extrusion belt, the food product becomes thermally treated in an indirect manner. In other words, the food product facing the front side of the first extrusion belt and facing the front side of the second extrusion belt becomes thermally treated by heat and/or cold coming from the back side and through, at least, the first extrusion belt or the second extrusion belt. The indirect manner of thermally treating the food product is often more suitable for food products such as cheese. An example of an advantage brought by such indirect manner of thermally treating the food material may be that it minimizes the risk of contaminating the food product. Another advantage is that the apparatus may be used for a relative long period of time without cleaning or maintenance.

The first thermal element may be arranged all the way along or partially along the longitudinal gap at the back side of the first extrusion belt. The second thermal element may be arranged all the way along or partially along the longitudinal gap at the back side of the second extrusion belt. Thereby the first thermal element and the second thermal element may be arranged for providing a desired distribution of heat or cold along the respective extrusion belt. In other words, the inventive apparatus allows for thermally treating the food product in an improved manner i.e. a flexible manner with an improved control.

By the term "food product" is hereby meant any product that may be used as food such as cheese products, baking products, meat products, chocolate and confectionary products, and filled products with multiple layered food products. In a particular embodiment the food product is cheese. In another embodiment the product is cheese that is made with the pasta filata method. By the term "thermally treating" is hereby meant heating and/or cooling the food product. The purpose of the thermal treatment is typically to form a liquid or semi-liquid cheese mass into a solid cheese mass. The apparatus gives the cheese mass the shape of a sheet.

The first thermal element may comprise a thermal sink and a fluid channel arranged to convey a thermal medium, wherein the thermal sink may be in contact with the back side of the first extrusion belt. The second thermal element may comprise a thermal sink and a fluid channel arranged to convey a thermal medium, wherein the thermal sink may be in contact with the back side of the second extrusion belt.

Thereby, the thermal medium may be injected into the fluid channel of the first thermal element. The thermal sink of the first thermal element may absorb the heat and/or the cold from the thermal medium and conduct it to the back side of the first extrusion belt. Alternatively or in combination, the thermal medium may be injected into the fluid channel of the second thermal element. The thermal sink of the second thermal element may correspondingly absorb the heat and/or the cold from the thermal medium and conduct it to the back side of the second extrusion belt. Thereby the thermal medium is not in direct contact with the food product. This in turn may, in comparison to conventional techniques, allow for running the apparatus for a longer period of time before cleaning or maintenance must be performed.

The thermal sink may comprise a flat even surface that is in contact with the back side of the first extrusion belt. The thermal sink may comprise a flat, even surface that is in contact with the back side of the second extrusion belt. Thereby, the flat and even surface of the thermal sink may facilitate conduction of heat and/or cold from the thermal sink to the back side of the first extrusion belt and from the thermal sink to the back side of the second extrusion belt. For instance, the flat and even surface of the thermal sink may increase a conduction area of the thermal sink facing the back side of the first and the second extrusion belt.

The first thermal element may be one of a plurality of similar thermal elements that are arranged one after the other at the back side of the first extrusion belt and having their fluid channels connected in series. The second thermal element may be one of a plurality of similar thermal elements that are arranged one after the other at the back side of the second extrusion belt and having their fluid channels connected in series. Thereby, the thermal medium may be injected into a lowermost or an uppermost thermal element of the plurality of similar thermal elements arranged at the back side of the first extrusion belt. The thermal medium may run into the fluid channels of the plurality of similar thermal elements one after the other and may exit from the other one of the lowermost or uppermost thermal element of the plurality of similar thermal elements arranged at the back side of the first extrusion belt. Thereby, the thermal medium may be injected into a lowermost or an uppermost thermal element of the plurality of similar thermal elements arranged at the back side of the second extrusion belt. The thermal medium may run into the fluid channels of the plurality of similar thermal elements one after the other and may exit from the other one of the lowermost or uppermost thermal element of the plurality of similar thermal elements arranged at the back side of the second extrusion belt.

The plurality of similar thermal elements arranged at the back side of the first extrusion belt may be connected in series with the plurality of similar thermal elements at the back side of the second extrusion belt. Thereby, the thermal medium may be injected into a lowermost or an uppermost thermal element of the plurality of similar thermal elements arranged at the back side of the first extrusion belt. The thermal medium may run into the fluid channels of the plurality of similar thermal elements at the back side of the first thermal element and the plurality of similar thermal elements at the back side of the second thermal element and may exit from a respective lowermost or uppermost thermal element of the plurality of similar thermal elements arranged at the back side of the second extrusion belt.

The first thermal element may be one of a plurality of similar thermal elements that are arranged one after the other at the back side of the first extrusion belt, wherein their fluid channels may not be connected in series. Alternatively or in combination, the second thermal element may be one of a plurality of similar thermal elements that are arranged one after the other at the back side of the second extrusion belt, wherein their fluid channels may not be connected in series. Thereby, each thermal element of the plurality of similar thermal elements, arranged at the back side of the first extrusion belt and/or arranged at the back side of the second extrusion belt may be controlled individually. This may in turn allow e.g. adjusting a temperature of each thermal element of the plurality of similar thermal elements individually. For instance, the food product may e.g. be cooled at the upper end of the longitudinal gap and may be heated at the lower portion of the longitudinal gap.

The first thermal element may be one of a plurality of similar thermal elements that are arranged one after the other at the back side of the first extrusion belt, wherein the fluid channel of some of the plurality of similar thermal elements may be connected in series. The second thermal element may be one of a plurality of similar thermal elements that are arranged one after the other at the back side of the second extrusion belt, wherein the fluid channel of some of the plurality of similar thermal elements may be connected in series. Thereby, the fluid channels of the plurality of similar thermal elements may be connected in a flexible manner.

The plurality of similar thermal elements at the back side of the first extrusion belt may be connected in parallel. The plurality of similar thermal elements at the back side of the second extrusion belt may be connected in parallel. The plurality of similar thermal elements at the back side of the first extrusion belt and the second extrusion belt may be connected in parallel. Connecting the thermal elements in parallel allows for providing an even, thermal treatment of the food product.

A lowermost thermal element of the plurality of similar thermal elements may comprise a fluid inlet for receiving and passing the thermal medium through the plurality of similar thermal elements, and an uppermost thermal element of the plurality of similar thermal elements may comprise a fluid outlet for letting out the thermal medium that has passed through the plurality of similar thermal elements. Thereby, in the case of cooling, the food product may gradually become cooler as being conveyed from the upper end of the longitudinal gap to the lower end of the longitudinal gap. Thereby, in the case of heating, the food product may gradually become hotter as being conveyed from the upper end of the longitudinal gap to the lower end of the longitudinal gap.

The distance between the first extrusion belt and the second extrusion belt may be in the range of 4 to 40 mm. Thereby, the thickness of the sheet may be in the range of 4 to 40 mm.

The apparatus may further comprise a first delimiting unit arranged along a first side of the longitudinal gap, and a second delimiting unit arranged along a second side of the longitudinal gap opposite to the first side of the longitudinal gap, each of the delimiting units may be at least partially arranged between the first extrusion belt and the second extrusion belt, to thereby limit a width of the sheet into which the food product may be formed. Thereby, the first and the second side of the longitudinal gap may, at least partially, be covered while being in contact with the respective first delimiting unit and the second delimiting unit. This may in turn prevent or at least reduce spilling of the food product out of the first and the second sides of the longitudinal gap of the apparatus. At least one of the first delimiting unit and the second delimiting unit may be movable such that a width of the sheet may be adjusted, as desired. By the width of the sheet is hereby meant a dimension of the sheet along a width of the extrusion belts.

By the term "arranged along a first side the longitudinal gap" or "arranged along a second side of the longitudinal gap" is hereby meant arranged transversally along the longitudinal gap on opposite sides of the longitudinal gap.

The upper portion of the first extrusion belt and the upper portion of the second extrusion belt that form the food product inlet may be arranged with an angle with respect to the longitudinal gap. The angle may be in the range of 30 to 45°. Thereby, the angle between the upper portion of the first extrusion belt and the upper portion of the second extrusion belt with respect to the longitudinal gap may provide an inlet of the longitudinal gap i.e. an inlet above the food product inlet. This may in turn facilitate providing the food product into the longitudinal gap as the inlet of the longitudinal gap may be filled with the food product i.e. may act a reservoir of the food product. In addition, the inlet of the longitudinal gap may prevent or at least reduce spilling of the food product out of the upper portion of the apparatus.

Each of the first extrusion belt and the second extrusion belt may comprise a respective first roller and a second roller arranged to guide the respective extrusion belt, the first rollers may be positioned to form an inlet of the longitudinal gap, the second rollers may be positioned vertically above and, as seen in a horizontal direction, further away from the gap than the first rollers. Thereby, the first roller and the second roller of the each of the first extrusion belt and the second extrusion belt may facilitate formation of the inlet of the longitudinal gap above the food product inlet in a simple and cost-effective manner. The first roller and the second roller of the each of the first extrusion belt and the second extrusion belt may respectively be arranged at the back side of the first extrusion belt and the second extrusion belt. The angle between the upper portion of the first extrusion belt with respect to the longitudinal gap may be controlled by adjusting the position of the first roller and the second roller of the first extrusion belt. The angle between the upper portion of the second extrusion belt with respect to the longitudinal gap may be controlled by adjusting the position of the first roller and the second roller of the second extrusion belt.

According to another aspect of the present invention there is provided a method of thermally treating and forming a food product into a sheet, the method comprising providing the food product at a longitudinal gap formed between a front side of a first extrusion belt and a front side of a second extrusion belt, forming the food product into the sheet by conveying the food product from an upper end of the longitudinal gap to a lower end of the longitudinal gap, and thermally treating the food product by cooling or heating a back side of the first extrusion belt and by cooling or heating a back side of the second extrusion belt while forming the food product into the sheet. This aspect may generally present the same or corresponding advantages as the former aspect.

The thermal treating of the food product may comprise cooling the food product, the method may further comprise heating the sheet from the back side of the first extrusion belt and from the back side of the second extrusion belt at the lower end of the longitudinal gap, subsequent to the cooling and forming the food product into the sheet. The step of heating the sheet from the back side of the first extrusion belt and from the back side of the second extrusion belt at the lower end of the longitudinal gap may facilitate release of the food product. For instance, in the case that the food product is a cheese product, the cheese product may stick onto the front side of the first extrusion belt and onto the front side of the second extrusion belt. Thereby, the step of heating the cheese product from the back side of the second extrusion belt at the lower end of the longitudinal gap may make the cheese product more flexible and facilitate the release of the cheese product.

The cooling may be performed at a temperature in the range of 5 to 30° and the heating may be performed at a temperature in the range of 15 to 50°. When heating is used then the lowest heating temperature is above the cooling temperature. Thereby the inventive method may allow for a wide range of cooling and heating temperatures.

The method may further comprise stacking a plurality of sheets to form a block of the food product, subsequent to the thermally treating and the forming of the food product into the sheet. Thereby, the step of stacking the plurality of sheets may allow for forming the food product into another shape i.e. a block. For instance, a plurality of sheets in the range of 2 to 4 sheets may be stacked on each other such that a block with a thickness in the range of 4 to 8 cm may be achieved.

The food product may be a cheese product that comprises proteins and fat that originate from milk. Thereby, the cheese product may be thermally treated while being formed into a cheese sheet. In addition, a cheese block may be obtained by stacking a plurality of cheese sheets.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a perspective front view of an apparatus used for thermally treating and forming a food product into a sheet.
Fig. 2 is a first side view of the apparatus of Fig. 1.
Fig. 3 is a perspective back view of the apparatus of Fig. 1.
Fig. 4 is a second side view of the apparatus of Fig. 1.
Fig. 5 is a perspective view of a thermal element.
Fig. 6 is a schematic view of a plurality of thermal elements.
Fig. 7 is a flow chart of a method for thermally treating and forming a food product into a sheet.

### Detailed Description

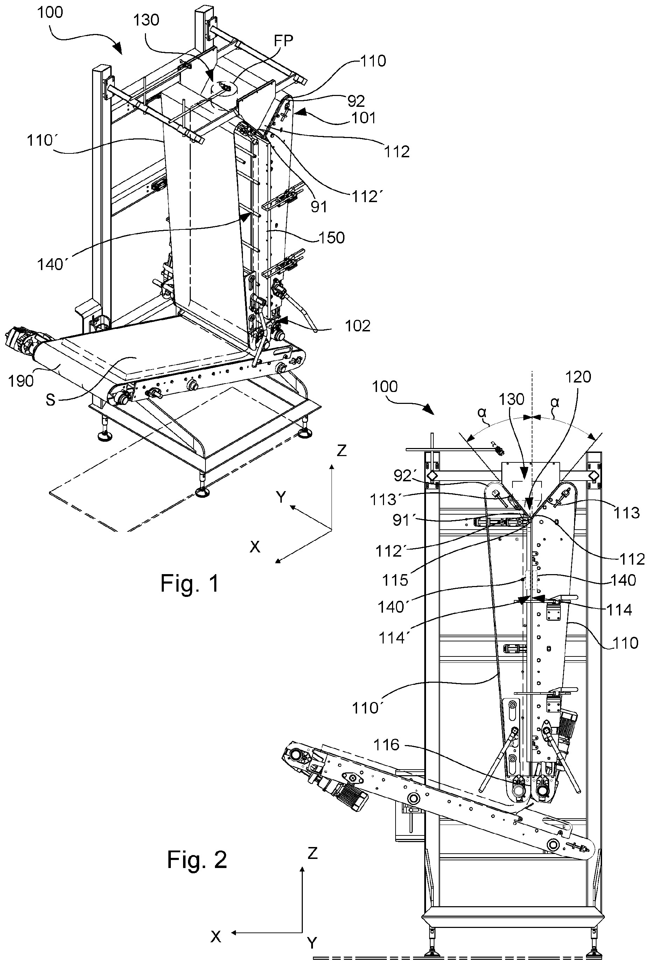

With reference to Figs. 1-4 an apparatus 100 is illustrated. The apparatus 100 may be used for for thermally treating and forming a food product FP into a sheet S. In the following the food product FP, and the apparatus 100 in relation to thermally treating and forming the food product FP into the sheet S will be described.

The food product FP may comprise any type of food products FP such as baking products, meat products, chocolate and confectionary products, and filled products with multiple layered food products. The food product FP may be a cheese product that comprises proteins and fat that are obtained from milk. The cheese product may comprise any type of cheese and/or melted cheese products. The cheese product may e.g. comprise mozzarella.

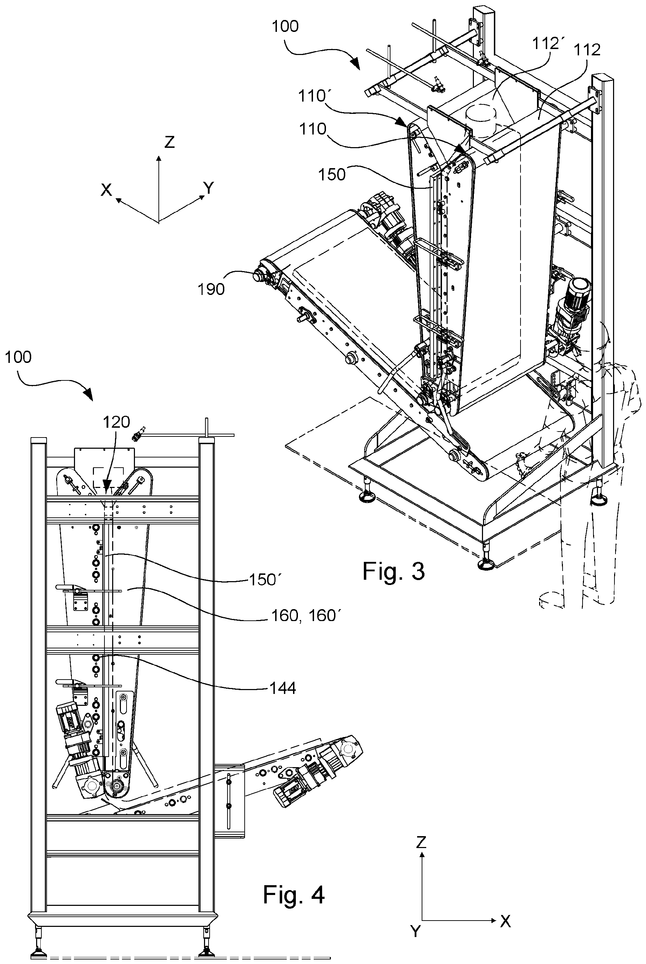

Figs. 1 and 3 show a respective perspective front view and a perspective back view of the apparatus 100. Figs. 2 and 4 show side views of the apparatus 100 shown in Figs. 1 and 3. In Figs. 1-4, direction Z indicates a vertical direction. Directions Y and X indicate a respective first and a second horizontal direction. A size of the apparatus 100 along the vertical direction Z may be in the range of 1 to 6 meters, or even more. The apparatus 100 comprises a first extrusion belt 110 and a second extrusion belt 110'. The first extrusion belt 110 and the second extrusion belt 110'extend longitudinally from an upper portion 101 of the apparatus 100 to a lower portion 102 of the apparatus 100. Fig. 1 shows that the first extrusion belt 110 and the second extrusion belt 110'extend vertically i.e. along the Z direction. The first extrusion belt 110 and the second extrusion belt 110'may extend with an angle with respect to the Z direction e.g. an angle of 45°.

Fig. 2 shows that each of the respective first extrusion belt 110 and the second extrusion belt 110' have a front surface (front side) 112, 112' and a back surface (back side) 114, 114'. The first and the second extrusion belts 110, 110' may be made of any flexible material that is suitable for belt and conveyer-like applications in the food industry. A width of the extrusion belts 110, 110' along the Y direction may be in the range of 0.5 to 6 meters, or even more.

The first extrusion belt 110 and the second extrusion belt 110' are arranged opposite to each other at a distance from each other, such that a gap 120 is formed in between the belts 110, 110'.

Figs. 2 and 4 show how the first extrusion belt 110 and the second extrusion belt 110' are arranged parallel to each other at a distance. Fig. 2 shows that a longitudinal gap 120 is formed in between the front side 112 of the first extrusion belt 110 and the front side 112' of the second extrusion belt 110'. The distance between the first extrusion belt 110 and the second extrusion belt 110' may be in the range of 4 to 40 mm, or even more. The distance between the front surface 112 of the first extrusion belt 110 and the front surface 112'of the second extrusion belt 110', i.e. the gap, may thus be in the range of 4 to 40 mm. The distance between the first extrusion belt 110 and the second extrusion belt 110' may be adjusted by using a connecting means 160, 160' in form of e.g. pins and screws.

The apparatus 100 further comprises a food product inlet 130. The food product inlet 130 is formed by an upper portion 113 of the first extrusion belt 110 and an upper portion 113' of the second extrusion belt 110'. The food product inlet 130 is configured to feed the food product FP into the longitudinal gap 120 at an upper end 115 of the longitudinal gap 120. The food product FP is schematically illustrated by dashed lines. The first extrusion belt 110 and the second extrusion belt 110' are arranged to convey the food product FP from the upper end of the longitudinal gap 120 to a lower end 116 of the longitudinal gap 120. The food product may be formed into the sheet S by being conveyed from the upper end 115 of the longitudinal gap 120 to the lower end 116 of the longitudinal gap 120. The sheet S is shown by dashed lines in Figs. 1-4.

When entering the inlet 130 the food product FP is liquid or semi liquid, such that it can flow down in the gap 120. The belts 110, 110' move with their front surfaces 112, 112' in a downward direction, pulling the food product down along the gap 120 (thereby "extruding" the food product). When the food product is pulled down along the gap 120 its temperature decreases which makes the food product solidify to a more firm but still flexible form having the shape of a sheet S. The sheet S is fed out at the lowermost part of the gap 120, allowing it to be conveyed to another station for further processing.

Each of the first extrusion belt 110 and the second extrusion belt 110' comprises a respective first roller 91, 91' and a second roller 92, 92' arranged to guide the respective extrusion belt 110, 110'. The first roller 91, 91' and the second roller 92, 92' may be any suitable, conventional and commercially-available roller. The first rollers 91, 91' are positioned to form an inlet of the longitudinal gap 120. The second rollers 92, 92' are positioned vertically above the first rollers 91, 91' i.e. along the Z direction. A distance between the second rollers 92, 92' and the first rollers 91, 91' along the Z direction may be at least 15 cm. The second rollers 92, 92' are positioned further away from the gap 120 than the first rollers 91, 91', as shown in Figs. 2 and 4. A distance between the second rollers 92, 92' and the first rollers 91, 91' along the X direction may be at least 15 cm. The upper portion 113 of the first extrusion belt 110 and the upper portion 113' of the second extrusion belt 110' that form the food product inlet 130 may be arranged with an angle α with respect to the longitudinal gap 120. Fig. 2 shows that the first rollers 91, 91' and the second rollers 92, 92' are arranged such that the respective upper portion 113, 113' of the first and the second extrusion belts 110, 110' have an angle α with respect to the longitudinal gap 120. The angle a, shown in Fig. 2, may be in the range of 30 to 45°.

The apparatus may comprise a first delimiting unit 150 arranged along a first side of the longitudinal gap 120 and a second delimiting unit 150' arranged along a second side of the longitudinal gap 120 opposite to the first side of the longitudinal gap 120. Each of the delimiting units 150, 150' may at least partially be arranged between the first extrusion belt 110 and the second extrusion belt 110'. The delimiting units 150, 150' may extend into the gap 120, effectively defining a width of the sheet S. The first and the second delimiting units 150 and 150'may be formed of stainless stell or a food grade plastic material. The first and the second delimiting units 150 and 150' may be movable such that they can be pushed further into or draws out from the gap 120. The first and the second delimiting units 150 and 150'may be taken out from the opposite sides of the longitudinal gap e.g. during maintenance and cleaning of the apparatus 100. As mentioned, the apparatus 100 comprises a belt 190 arranged at the lower portion 102 of the apparatus 100. The belt 190 may be a conventional food grade conveyer belt arranged to transfer the sheet S to a next unit e.g. a shredding unit.

The apparatus 100 further comprises a first thermal element 140. The first thermal element 140 is arranged at the back side 114 of the first extrusion belt 110. The first thermal element 140 is arranged along at least a portion of the longitudinal gap 120. The apparatus further comprises a second thermal element 140'. The second thermal element 140' is arranged at a back side 114' of the second extrusion belt 110', as shown in Fig. 1. The second thermal element 140' is arranged along at least a portion of the longitudinal gap 120, as shown in Fig. 1. The food product FP may be thermally treated while being formed into the sheet S by being conveyed from the upper end 115 of the longitudinal gap 120 to the lower end 116 of the longitudinal gap 120.

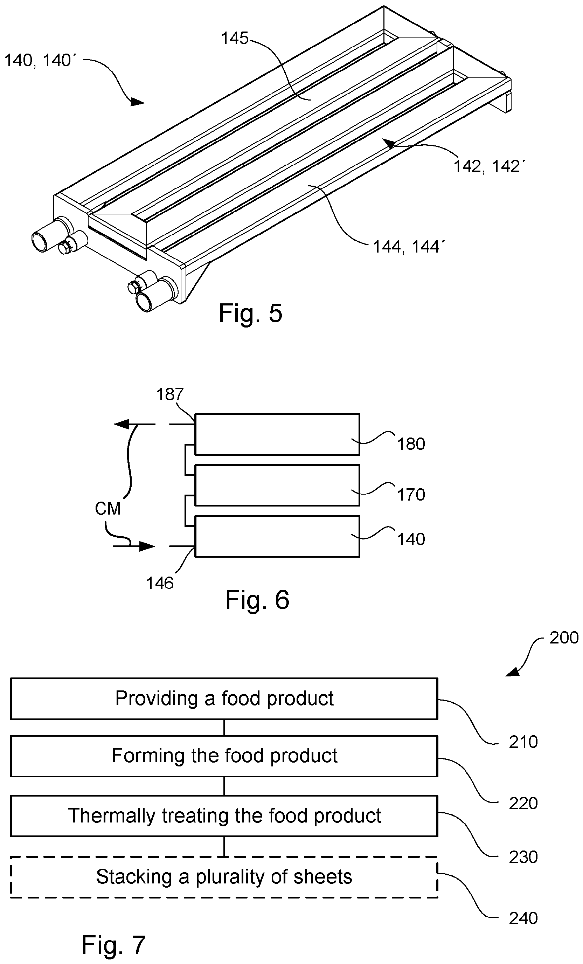

Figs. 5 shows a perspective view of a thermal element 140. The thermal element 140, shown in Fig. 5, is hereinafter referred to as the first thermal element 140. However, the following disclosure of first thermal element 140 is equally applicable to the second thermal element 140'. The first thermal element 140 comprises a thermal sink 142 and a fluid channel 144. The thermal sink 142 comprises a flat and even surface 145. The fluid channel 144 of the first thermal element 140 may be arranged to convey a thermal medium. The thermal sink 142 may be in contact with the back side 114 of the first extrusion belt 110. The flat and even surface 145 of the first thermal sink 142 may be in contact with the back side 114 of the first extrusion belt 110. The thermal sink 142 may be in a close proximity with the back side 114 of the first extrusion belt 110. The flat and even surface 145 of the first thermal sink 142 may be in a close proximity with the back side 114 of the first extrusion belt 110. The thermal sink 142 may be formed of stainless steel. The thermal medium may be any suitable heating or cooling medium, such as water.

Fig. 6 shows a plurality of thermal elements 140, where the first thermal element 140 is one of a plurality of similar thermal elements 140, 170, 180 that are arranged one after the other one. The plurality of similar thermal elements 140, 170, 180 may be arranged at the back side 114 of the first extrusion belt 110. The plurality of similar thermal elements 140, 170, 180 may be arranged such that their fluid channels 144 are connected in series. Fig. 6 shows that a lowermost thermal element 140 of the plurality of similar thermal elements 140, 170, 180 comprises a fluid inlet 146. The fluid inlet 146 may receive and pass the thermal medium CM through the plurality of similar thermal elements 140, 170, 180. An uppermost thermal element 180 of the plurality of similar thermal elements 140, 170, 180 comprises a fluid outlet 187. The fluid outlet 187 may let out the thermal medium CM that has passed through the plurality of similar thermal elements 140, 170, 180. Each thermal element may comprise a fluid inlet 146 and a fluid outlet 187. The fluid inlet 146 and the fluid outlet 187 of each thermal element may be controlled individually. For instance, a first fluid medium CM having a first temperature may be injected to an inlet 146 of the lowermost thermal element 140. A second fluid medium CM having a second temperature may be injected to an inlet of the middle thermal element 170. A third fluid medium CM having a third temperature may be injected to an inlet of the uppermost thermal element 180 of the plurality of similar thermal elements 140, 170, 180. The first temperature, the second temperature and the third temperature may be the same. The first temperature, the second temperature and the third temperature may be different.

Fig. 7 shows a flow chart of a method 200 for thermally treating and forming a food product into a sheet by using, for example, an apparatus as described above. The method 200 comprises providing 210 the food product FP at a longitudinal gap 120 formed between a front side 112 of a first extrusion belt 110 and a front side 112' of a second extrusion belt 110'. The step of providing 210 the food product FP at a longitudinal gap 120 may be performed by pouring the product into the food product inlet 130. The first extrusion belt, the second extrusion belt 110' may be parts of an apparatus 100, as described above.

The method 200 proceeds by forming 220 the food product FP into the sheet S by conveying the food product FP from an upper 115 end of the longitudinal gap 120 to a lower end 116 of the longitudinal gap 120. The step of conveying the food product FP from an upper 115 end of the longitudinal gap 120 to a lower end 116 of the longitudinal gap 120 may be performed as described for the apparatus 100.

The method 200 further proceeds by thermally treating 230 the food product FP by cooling and/or heating a back side 114 of the first extrusion belt 110 and by cooling and/or heating a back side 114' of the second extrusion belt 110' while forming the food product FP into the sheet S. The step of thermally treating 230 the food product FP may be performed as described above. The thermal treating 230 of the food product may comprise cooling the food product FP. The method 200 may further comprise heating the sheet from the back side 114 of the first extrusion belt 110 and from the back side 114' of the second extrusion belt 110' at the lower end 116 of the longitudinal gap 120. The step of heating the sheet may be performed subsequent to the step of cooling and forming the food product FP into the sheet S. The cooling may be performed at a temperature in the range of 5 to 30°. The heating may be performed at a temperature in the range of 15 to 50°.

The method 200 may further comprise stacking 240 a plurality of sheets to form a block of the food product FP. The step of stacking 240 may be performed after to the thermally treating 230 and the forming 220 of the food product FP into the sheet S. The method 200 may proceed by shredding the sheet S into smaller sizes. The step of shredding may be performed in a manner which per se is known in the art. The method 200 may further proceed by packaging the sliced sheets S. The step of packaging may be performed in a manner which per se is known in the art.

From the description above follows that, although various embodiments of the invention have been described and shown, the invention is not restricted thereto, but may also be embodied in other ways within the scope of the subject-matter defined in the following claims.

## Claims

1. An apparatus (100) for thermally treating and forming a food product (FP) into a sheet (S), the apparatus (100) comprising:
a first extrusion belt (110) and a second extrusion belt (110') extending longitudinally from an upper portion (101) of the apparatus (100) to a lower portion (102) of the apparatus (100), wherein the first extrusion belt (110) and the second extrusion belt (110') are arranged opposite to each other at a distance such that a longitudinal gap (120) is formed in between a front side (112) of the first extrusion belt (110) and a front side (112') of the second extrusion belt (110'),
a food product inlet (130) formed by an upper portion (113) of the first extrusion belt (110) and an upper portion (113') of the second extrusion belt (110'), the food product inlet (130) being configured to feed the food product (FP) into the longitudinal gap (120) at an upper end (115) thereof, and
wherein the first extrusion belt (110) and the second extrusion belt (110') are arranged to convey the food product (FP) from the upper end (115) of the longitudinal gap (120) to a lower end (116) of the longitudinal gap (120), wherein
a first thermal element (140) is arranged at a back side (114) of the first extrusion belt (110) along at least a portion of the longitudinal gap (120) and a second thermal element (140') is arranged at a back side (114') of the second extrusion belt (110') along at least a portion of the longitudinal gap (120), such that the food product (FP) may be thermally treated and formed into the sheet (S) by being conveyed from the upper end (115) of the longitudinal gap (120) to the lower end (116) of the longitudinal gap (120).

2. The apparatus (100) according to claim 1, wherein the first thermal element (140) comprises a thermal sink (142) and a fluid channel (144) arranged to convey a thermal medium (CM), wherein the thermal sink (142) is in contact with the back side (114) of the first extrusion belt (110).

3. The apparatus (100) according to claim 2, wherein the thermal sink (142) comprises a flat, even surface (145) that is in contact with the back side (114) of the first extrusion belt (110).

4. The apparatus (100) according to claim 3, wherein the first thermal element (140) is one of a plurality of similar thermal elements (140, 170, 180) that are arranged one after the other at the back side (114) of the first extrusion belt (110) and having their fluid channels (144) connected in series.

5. The apparatus (100) according to claim 4, wherein
a lowermost thermal element (140) of the plurality of similar thermal elements (140, 170, 180) comprises a fluid inlet (146) for receiving and passing the thermal medium (CM) through the plurality of similar thermal elements (140, 170, 180), and
an uppermost thermal element (180) of the plurality of similar thermal elements (140, 170, 180) comprises a fluid outlet (187) for letting out the thermal medium (CM) that has passed through the plurality of similar thermal elements (140, 170, 180).

6. The apparatus (100) according to any of the preceding claims, wherein the distance between the first extrusion belt (110) and the second extrusion belt (110') is in the range of 4 to 40 mm, thereby giving the longitudinal gap (120) a thickness that is in the same range.

7. The apparatus (100) according to any of the preceding claims, comprising a first delimiting unit (150) arranged along a first side of the longitudinal gap (120), and a second delimiting unit (150') arranged along a second side of the longitudinal gap (120) opposite to the first side of the longitudinal gap (120), each of the delimiting units (150, 150') being at least partially arranged between the first extrusion belt (110) and the second extrusion belt (110'), to thereby limit a width of the sheet (S) into which the food product (FP) may be formed.

8. The apparatus (100) according to any of the preceding claims, wherein the upper portion (113) of the first extrusion belt (110) and the upper portion (113') of the second extrusion belt (110') that form the food product inlet (130) are arranged with an angle (a) with respect to the longitudinal gap (120).

9. The apparatus (100) according to claim 8, wherein the angle (a) is in the range of 30 to 45°.

10. The apparatus (100) according to any of the preceding claims, wherein each of the first extrusion belt (110) and the second extrusion belt (110') comprises a respective first roller (91, 91') and a second roller (92, 92') arranged to guide the respective extrusion belt (110, 110'), the first rollers (91, 91') being positioned to form an inlet of the longitudinal gap (120), the second rollers (92, 92') being positioned vertically above and, as seen in a horizontal direction (X), further away from the gap (120) than the first rollers (91, 91').

11. A method (200) for thermally treating and forming a food product (FP) into a sheet (S), the method (200) comprising:
providing (210) the food product (FP) at a longitudinal gap (120) formed between a front side (112) of a first extrusion belt (110) and a front side (112') of a second extrusion belt (110'),
forming (220) the food product (FP) into the sheet (S) by conveying the food product (FP) from an upper (115) end of the longitudinal gap (120) to a lower end (116) of the longitudinal gap (120), and
thermally treating (230) the food product (FP) by cooling or heating a back side (114) of the first extrusion belt (110) and by cooling or heating a back side (114') of the second extrusion belt (110') while forming the food product (FP) into the sheet (S).

12. The method (200) according to claim 11, wherein the thermal treating (230) of the food product comprises cooling the food product (FP), the method (200) further comprising:
heating the sheet from the back side (114) of the first extrusion belt (110) and from the back side (114') of the second extrusion belt (110') at the lower end (116) of the longitudinal gap (120), subsequent to the cooling and forming the food product (FP) into the sheet (S).

13. The method (200) according to claim 12, wherein the cooling is performed at a temperature in the range of 5 ° to 30° and the heating is performed at a higher temperature and within the range of 15 ° to 50°.

14. The method (200) according to any one of claims 11-13, comprising:
stacking (240) a plurality of sheets to form a block of the food product (FP), subsequent to the forming (220) of the food product (FP) into the sheet (S) and the thermally treating (230).

15. The method (200) according to any one of claims 11-14, wherein the food product (FP) is a cheese product that comprises proteins and fat that originate from milk.
